# EUROPÄISCHE PATENTSCHRIFT

(11) **EP 0 528 304 B1**
(45) Veröffentlichungstag und Bekanntmachung des Hinweises auf die Patenterteilung: **05.06.1996**
(21) Anmeldenummer: 92113532.3
(22) Anmeldetag: 08.08.1992
(51) Int. Cl.: C08G 18/67, C09D 175/14, C08G 18/62

(54) **Bindemittelgemische und ihre Verwendung**
Binder compositions and their use
Compositions de liant et leur utilisation

(30) Priorität: 20.08.1991 DE 4127513
(43) Veröffentlichungstag der Anmeldung: 24.02.1993
(73) Patentinhaber: BAYER AG, 51368 Leverkusen (DE)
(72) Erfinder: Brahm, Martin, Dr., W-5250 Engelskirchen 2 (DE); Margotte, Dieter, Dr., W-4150 Krefeld (DE); Wamprecht, Christian, Dr., W-4040 Neuss 22 (DE); Hovestadt, Wieland, Dr., W-4150 Krefeld (DE); Meixner, Jürgen, Dr., W-4150 Krefeld (DE)

(56) Entgegenhaltungen:
- EP-A- 0 068 383
- EP-A- 0 129 124
- EP-A- 0 359 532
- US-A- 3 993 849
- US-A- 3 998 768
- US-A- 4 652 605

## Beschreibung

Die Erfindung betrifft neue Bindemittel für Zweikomponenten-Polyurethan-Beschichtungsmittel, bestehend im wesentlichen aus einer Polyisocyanatkomponente und einer hydroxyfunktionellen flüssigen Polyacrylatkomponente mit mindestens bimodaler Molekulargewichtsverteilung und ihre Verwendung als Bindemittel in Zweikomponenten-Polyurethan-Beschichtungsmitteln.

Zweikomponenten-Polyurethan-Beschichtungsmittel basierend auf hydroxyfunktionellen Polyacrylaten (der Begriff "Polyacrylat'' soll hier und nachstehend stellvertretend für Polymerisate bzw. Copolymerisate von Acrylsäure- oder Methacrylsäureestern mit sich selbst oder mit anderen Monomeren stehen) und Polyisocyanaten sind seit langem bekannt (vgl. z.B. Glasurit-Handbuch, Lacke und Farben, 11. Auflage, Seite 66ff., Curt R. Vincentz Verlag, Hannover 1984). Sie zeichnen sich aus durch ihre hervorragende Glanzhaltung, UV- und Chemikalienbeständigkeit und übertreffen hierbei noch Zweikomponenten-Polyurethanlacke auf Polyesterbasis bzw. Lacke, die als Hydroxylkomponente Abmischungen von Polyacrylatcopolymerisaten mit Polyestern enthalten. Durch geeignete Wahl der Comonomeren lassen sich Beschichtungen mit guter Härte und Kratzfestigkeit, aber auch flexible Einstellungen erzielen. Die üblicherweise eingesetzten Polyhydroxypolyacrylate sind mit den gebräuchlichen Lackpolyisocyanaten, die als Vernetzer eingesetzt werden, verträglich und mischbar.

Zur Herstellung von bei Raumtemperatur schnelltrocknenden Zweikomponenten-Polyurethanlacken auf Basis von hydroxyfunktionellen Polyacrylaten werden im allgemeinen vergleichsweise hochmolekulare Polyhydroxypolyacrylate eingesetzt, die aufgrund ihres hohen Molekulargewichts eine hohe Viskosität aufweisen und daher zwecks Sicherstellung einer ausreichend niedrigen Verarbeitungsviskosität der Lacke im allgemeinen nur in stark mit Lösungsmitteln verdünnter Form zur Anwendung kommen. Solche Lacksysteme werden z.B. in EP-A-0 068 383 beschrieben.

Infolge immer kürzer werdender Taktzeiten, insbesondere bei industrieller Verarbeitung, besteht zur Zeit ein großer Bedarf für Zweikomponenten-Polyurethanlacke, die eine noch deutlich schnellere Trocknung ermöglichen als die Systeme der genannten Veröffentlichung, wobei jedoch aus ökologischen Gründen der Anteil an organischen Lösemitteln keinesfalls erhöht werden darf.

Es war daher die der Erfindung zugrundeliegende Aufgabe, neue Bindemittelgemische für Zweikomponenten-Polyurethanlacke auf Basis von Polyisocyanaten und hydroxyfunktionellen Polyacrylatharzen zur Verfügung zu stellen, die eine deutlich schnellere Trocknung der Lacke bei Raumtemperatur ermöglichen, ohne jedoch eine höhere Viskosität oder einen höheren Gehalt an Lösungsmittel aufzuweisen.

Diese Aufgabe konnte mit den nachstehend näher beschriebenen erfindungsgemäßen Bindemittelgemischen gelöst werden. Erfindungswesentlich ist die Beobachtung, daß zur Lösung der genannten Aufgabe solche Bindemittelgemische auf Basis von organischen Polyisocyanaten und hydroxyfunktionellen Polyacrylaten geeignet sind, deren Polyacrylatkomponente eine mindestens bimodale Molekulargewichtsverteilung aufweist.

Gegenstand der Erfindung sind Bindemittelgemische für bei Raumtemperatur trocknende Zweikomponenten-Polyurethan-Beschichtungsmittel, bestehend im wesentlichen aus
a) einer Polyisocyanatkomponente,
b) einer hydroxyfunktionellen Polyacrylatkomponente und gegebenenfalls
c) reaktiven Verdünnern
in einem, einem NCO/OH-Äquivalentverhältnis von 0,2:1 bis 5:1 entsprechenden Mengenverhältnis, dadurch gekennzeichnet, daß es sich bei der Polyacrylatkomponente b) um ein Gemisch von mindestens zwei, durch radikalische Copolymerisation olefinisch ungesättigter Monomerer in einem Lösungsmittel hergestellte, Hydroxylgruppen aufweisende Poly(meth)acrylatharze des Molekulargewichtsbereichs Mn 1 000 bis 100 000 mit mindestens bimodaler Molekulargewichtsverteilung handelt, bei deren Herstellung Monomerengemische mit einem Anteil an Hydroxylgruppen aufweisenden Monomeren von weniger als 50 Gew.-% eingesetzt worden sind, wobei das Maximum des gelpermeationschromatographisch bestimmten Molekulargewichts Mn der Harzkomponente mit dem höchsten Molekulargewicht mindestens das 1,3fache des Maximums des gelpermeationschromatographisch bestimmten Molekulargewichts Mn der Harzkomponente mit dem niedrigsten Molekulargewicht beträgt, und wobei die Komponente. mit dem höchsten Molekulargewicht einen Hydroxylgruppengehalt von 0,1 bis 4 Gew.-% und die Komponente mit dem niedrigsten Molekulargewicht einen Hydroxylgruppengehalt von 0,5 bis 8 Gew.-% aufweist, mit der Maßgabe, daß der Hydroxylgruppengehalt der Komponente mit dem niedrigsten Molekulargewicht mindestens das 2fache des Hydroxylgruppengehalts der Komponente mit dem höchsten Molekulargewicht beträgt.

Gegenstand der Erfindung ist auch die Verwendung dieser Bindemittelgemische als Bindemittel für Zweikomponenten-Polyurethan-Beschichtungsmitteln.

In der US-PS 4 652 605 wird die Herstellung von hydroxyfunktionellen Polyacrylatharzen beschrieben, wobei die Polymerisationsreaktion in Gegenwart eines polymeren Verdünnungsmittels durchgeführt wird. Als polymeres Verdünnungsmittel kommen auch hydroxyfunktionelle Polyacrylate in Betracht. Eine derartige Arbeitsweise wird jedoch an keiner Stelle konkret beschrieben. Im übrigen weisen die Copolymerisate der US-PS 4 652 605 ein vergleichsweise niedriges Molekulargewicht Mn von 400 bis 2 000 auf, wobei zu ihrer Herstellung Monomerengemische eingesetzt werden, die mindestens 50 Gew.-% an Vinylmonomeren mit aktiven Wasserstoffatomen aufweisen. Auch die Verwendung von organischen Polyisocyanaten als Vernetzer für die Copolymerisate der Vorveröffentlichung wird nur beiläufig erwähnt und in keinem Ausführungsbeispiel konkret beschrieben.

Die EP-A-0 129 124 beschreibt zwar bereits Überzugsmassen auf Basis von mindestens zwei unterschiedlichen Acrylatpolymerisaten und einer Polyisocyanatkomponente, jedoch werden an keiner Stelle konkret Gemische von Polyacrylatharzen mit bimodaler Molekulargewichtsverteilung beschrieben, die der erfindungsgemäß einzusetzenden Komponente b) entsprechen. Im übrigen wird in der Vorveröffentlichung auf die der Erfindung zugrunde liegende Aufgabe, die Herstellung von Bindemittelgemischen für schnelltrocknende Lacke überhaupt nicht eingegangen.

Die in den erfindungsgemäßen Bindemittelgemischen vorliegende Komponente a) besteht aus mindestens einem organischen Polyisocyanat einer über 2, vorzugsweise bei 2,6 bis 6, liegenden mittleren NCO-Funktionalität. Es handelt sich um die an sich bekannten Lackpolyisocyanate auf Basis von einfachen Diisocyanaten des Molekulargewichtsbereichs 168 bis 300. Diese Lackpolyisocyanate stellen Uretdion-, Biuret-, Urethan- und/oder Isocyanuratgruppen aufweisende Modifizierungsprodukte der einfachen Diisocyanate dar, wobei im allgemeinen nach der Modifizierungsreaktion überschüssige Mengen an Ausgangsdiisocyanaten, insbesondere durch Dünnschichtdestillation, so weit entfernt werden, daß in den Lackpolyisocyanaten höchstens 0,7, vorzugsweise höchstens 0,5 Gew.-%, an überschüssigem Ausgangsdiisocyanat vorliegt. Die als Komponente a) in den erfindungsgemäßen Bindemittelgemischen vorliegenden Lackpolyisocyanate weisen im allgemeinen einen NCO-Gehalt von 8 bis 40, vorzugsweise 10 bis 32 Gew.-%, auf.

Zur Herstellung der Lackpolyisocyanate geeignete Diisocyanate sind beispielsweise 2,4-Diisocyanatotoluol, seine technischen Gemische mit 2,6-Diisocyanatotoluol, 4,4'-Diisocyanatodiphenylmethan, seine technischen Gemische mit den 2,4'- und gegebenenfalls 2,2'-Isomeren, sowie gegebenenfalls mit seinen höheren Homologen, wie sie durch Phosgenierung von Anilin/Formaldehyd-Kondensaten erhalten werden, 4,4'-Diisocyanatodicyclohexylmethan und dessen Gemische mit 2,4'-Diisocyanatodicyclohexylmethan, 1,6-Diisocyanatohexan (HDI), 1-Isocyanato-3,3,5-trimethyl-5-isocyanatomethyl-cyclohexan (IPDI) oder Gemische dieser Diisocyanate.

Die Herstellung der Lackpolyisocyanate aus den beispielhaft genannten Ausgangsdiisocyanaten erfolgt nach bekannten Methoden des Standes der Technik. So kann beispielsweise die Herstellung der Biuretgruppen aufweisenden Lackpolyisocyanate nach dem Verfahren der US-Patentschriften 3 124 605, 3 358 010, 3 903 126, 3 903 127 oder 3 976 622 erfolgen. Die Herstellung von erfindungsgemäß einsetzbaren Urethanpolyisocyanaten geschieht beispielsweise gemäß US-PS 3 183 112, während die Herstellung von Isocyanuratgruppen aufweisenden, erfindungsgemäß geeigneten Lackpolyisocyanaten, beispielsweise nach den Verfahren der GB-PSen 1 060 430, 1 234 972, 1 506 373 oder 1 458 564 bzw. gemäß US-PS 3 394 111, US-PS 3 645 979 oder US-PS 3 919 218 erfolgt. Bei der Herstellung der Isocyanuratgruppen aufweisenden Lackpolyisocyanate gemäß den letztgenannten Veröffentlichungen entstehen oftmals gleichzeitig Uretdiongruppen aufweisende Dimerisierungsprodukte, die im Gemisch mit den Isocyanuratgruppen aufweisenden Polyisocyanaten als Lackpolyisocyanate erfindungsgemäß verwendbar sind.

Besonders bevorzugt werden beim erfindungsgemäßen Verfahren als Härterkomponente a) Uretdion-, Biuret-, Urethan- und/oder Isocyanuratgruppen auf Basis von (cyclo)aliphatischen Diisocyanaten eingesetzt. Besonders bevorzugt sind Biuretgruppen aufweisende Polyisocyanate auf Basis von HDI und Isocyanuratgruppen, sowie gegebenenfalls Uretdiongruppen aufweisende Polyisocyanate auf Basis von HDI und/oder IPDI.

Die Polyacrylatharze der erfindungswesentlichen Komponente b) weisen gelpermeationschromatographisch unter Verwendung von Polystyrol als Standard bestimmbare Molekulargewichte Mn innerhalb des Bereichs von 1000 bis 100 000, vorzugsweise 1 000 bis 30 000, auf. Wesentlich ist eine zumindest bimodale, vorzugsweise bimodale Molekulargewichtsverteilung, wobei sich im Gelpermeationschromatogramm mindestens zwei Maxima ergeben, deren Molmasse, bezogen auf eine auf Polystyrolstandard basierende Skala, sich vorzugsweise um einen Faktor von mindestens 1,3, besonders bevorzugt von mindestens 1,5, voneinander unterscheiden, wobei das Maximum mit der höchsten Molmasse über 5 000, vorzugsweise über 9 000 und besonders bevorzugt über 15 000, liegt. Ein Maximum kann hierbei auch durch eine Schulter im Chromatogramm repräsentiert werden. Im übrigen weist die Komponente mit dem höchsten Molekulargewicht einen Hydroxylgruppengehalt von 0,1 bis 4, vorzugsweise von 0,3 bis 2 Gew.-% und die Komponente mit dem niedrigsten Molekulargewicht einen Hydroxylgruppengehalt von 0,5 bis 8, vorzugsweise 1 bis 5 Gew.-% auf, wobei der Hydroxylgruppengehalt der Komponente mit dem niedrigsten Molekulargewicht im allgemeinen zumindest das 1,5-fache, vorzugsweise zumindest das 2-fache des Hydroxylgruppengehalts der Komponente mit dem höchsten Molekulargewicht ausmacht.

Vorzugsweise handelt es sich bei der Komponente b) um ein Gemisch, welches im wesentlichen aus zwei unterschiedlichen Polyacrylatharzen besteht, die in zwei separaten Arbeitsgängen hergestellt worden sind, wobei der Gewichtsanteil der Harzkomponente mit dem niedrigeren Molekulargewicht 5 bis 95 Gew.-%, vorzugsweise 30 bis 70 Gew.-%, bezogen auf das Gesamtgewicht der Komponente b), ausmacht.

Alle hier gemachten Angaben bezüglich der Zusammensetzung der Komponente b) beziehen sich jeweils auf den Feststoff ohne Berücksichtigung von gegebenenfalls vorliegenden inerten Lösungsmitteln.

Die Herstellung der erfindungswesentlichen Polyacrylatkomponente b) erfolgt vorzugsweise in einem mehrstufigen, vorzugsweise zweistufigen Verfahren in einem Reaktionsgefäß. In den einzelnen Stufen wird nach dem allgemein bekannten Zulaufverfahren polymerisiert. Verfährt man in zwei Verfahrensstufen, so erhält man Polymerisate mit bimodaler Molekulargewichtsverteilung. Die Einstellung der mittleren Molekulargewichte der in den einzelnen Stufen synthetisierten Copolymerisate kann durch die gewählte Polymerisationstemperatur, Initiator/Monomerkonzentration und durch Substanzen eingestellt werden, die als Radikalübertragungsmittel dienen. Bevorzugt wird nur die Polymerisationstemperatur und/oder die Initiator/Monomerkonzentration variiert, wobei ganz besonders bevorzugt beide Größen gleichzeitig geändert werden.

In der ersten Stufe wird hierbei eine Comonomermischung und eine Initiatormischung zu einem organischen Lösungsmittel zudosiert. Es wird bei niedriger Temperatur und/oder niedriger Initiatorkonzentration eine Comonomermischung mit geringer Konzentration an ungesättigten hydroxyfunktionellen Monomeren polymerisiert. Der Hydroxylgruppengehalt bezogen auf das Festharz beträgt 0,1 und 4, vorzugsweise 0,3 bis 2 Gew.-%, wobei jedoch weniger als 50 Gew.-% Hydroxylgruppen tragende Monomere, bezogen auf die Gesamtmenge der eingesetzten Monomeren, eingesetzt werden, vorzugsweise weniger als 30 %. Hierbei entsteht der hochmolekulare Anteil des Gemischs.

In einer zweiten Stufe wird in die bereits polymerisierte Polymer/Lösungsmittelmischung eine zweite in der Konzentration und/oder Zusammensetzung unterschiedliche Comonomerzubereitung einpolymerisiert, wobei die Temperatur und/oder Initiatorkonzentration höher liegen muß als in der ersten Verfahrensstufe.

Hierbei wird eine höhere Konzentration an hydroxyfunktionellen Acrylatmonomeren eingesetzt Der Hydroxylgruppengehalt, bezogen auf das Festharz, beträgt 0,5 bis 8 Gew.-%, vorzugsweise 1 bis 5 Gew.-%. Dies ergibt den niedermolekularen Anteil des Gemischs.

Selbstverständlich können die oben beschriebenen Verfahrensstufen auch in umgekehrter Weise durchlaufen werden.

Nach erfolgter Copolymerisationsreaktion können gegebenenfalls noch verbleibende Spuren leicht flüchtiger Monomerer durch "Andestillieren" des Copolymerisationsansatzes entfernt werden.

Im allgemeinen liegt die Polymerisationstemperatur innerhalb des Bereichs von 40 bis 190°C, wobei die Eigenschaften der Copolymerisate, insbesondere deren Molekulargewicht, wie bereits angedeutet, durch geeignete Wahl der Reaktionstemperatur und der Initiierungsrate des Initiators eingestellt wird. Die Halbwertszeit der eingesetzten Initiatoren sollte nicht unter einer Sekunde und nicht über einer Stunde liegen. Vorzugsweise werden Art der Initiatoren und Reaktionstemperatur so gewählt, daß die Halbwertszeit bei 1 bis 20 Min. liegt. Die Herstellung des hochmolekularen Anteils erfolgt vorzugsweise bei gleicher bis niedrigerer Temperatur, im Vergleich zur Herstellung des niedermolekularen Anteils.

Die Konzentration an Initiator bzw. Initiatorgemisch kann für beide Verfahrensstufen gleich oder unterschiedlich sein. Bevorzugt wird bei der Herstellung des Copolymerisats mit durchschnittlich höherem Molekulargewicht weniger Initiator, besonders bevorzugt weniger als die Hälfte der Menge verwendet, als für den Aufbau des Copolymerisates mit durchschnittlich niedrigerem Molekulargewicht.

Zur Regelung des Molekulargewichts können zusätzlich Hilfsmittel eingesetzt werden, die als Übertragungsmittel dienen, wie beispielsweise Mercaptanverbindungen.

Bei den oben beschriebenen, bevorzugten Art der Herstellung der Polyacrylatkomponente b) entstehen, wie dargelegt, Polyacrylatgemische mit mindestens bimodaler Molekulargewichtsverteilung. Dies ist darauf zurückzuführen, daß Pfropf- und/oder Übertragungsreaktionen, die zur Bildung von Makromolekülen führen, allenfalls eine untergeordnete Bedeutung haben. Demzufolge können Polyacrylatgemische, die erfindungsgemäß als Komponente b) geeignet sind, auch durch Abmischung von unabhängig voneinander hergestellten Polyacrylatharzen eines unterschiedlichen Molelculargewichts hergestellt werden. Die beschriebene Herstellung der Gemische in einem Eintopfverfahren stellt demzufolge lediglich eine bevorzugte Variante dar.

Zur Initiierung der radikalischen Polymerisation können Peroxidverbindungen, wie z.B. symmetrische Diacylperoxide, wie z.B. Acetyl-, Propionyl-, Butyrylperoxid, sowie Lauroylperoxid, symmetrische Peroxidicarbonate, wie z.B. Diethyl-, Diisopropyl-, Dicyclohexyl- sowie Dibenzylperoxidicarbonat, Dibenzoylperoxid und Brom-, Nitro-, Methyl- oder Methoxygruppen-substituierte Benzoylperoxide, Dicumylperoxid, Cumolhydroperoxid, Di-tert.-butylperoxid, tert.-Butylperoxy-2-ethyl-hexanoat, tert.-Butylperpivalat, tert.-Butylperoctoat, tert.-Butylphenylperacetat, tert.-Butyl-N-(phenylperoxy)carbonat, tert.-Butyl-N-(2,3- oder 4-chlor-phenylperoxy)carbonat, tert.-Butylhydroperoxid, 2,2-Di-tert.-butylperoxybutan, tert.-Amylperbenzoat, 1,3-Bis-(tert.-butylperoxyisopropyl)-benzol, Diisopropylbenzolmonohydroperoxid und Peroxyketale, wie z.B. 2,2-Di(tert.-amylperoxy)-propan und Ethyl-3,3-di-(tert.-amylperoxy)butyrat, Butanonperoxid; aliphatische Azoverbindungen, wie beispielsweise Azobisisobutyronitril und Azobiscyclohexannitril, Azo-bis-2-methylvaleronitril, 2,2'-Azo-bis-isobuttersäurealkylester oder thermolabile hochsubstituierte Ethanderivate, beispielsweise auf Basis Benzpinakol und auf Basis silylsubstituierter Ethanderivate, aber auch energiereiche Strahlung verwendet werden.

Als Monomere zur Herstellung der Copolymerisate b) kommen insbesondere
1. alkoholische Hydroxylgruppen aufweisende Monomere,
2. gegebenenfalls Anhydridgruppen aufweisende Monomere ohne aktive Wasserstoffatome und gegebenenfalls
3. weitere funktionelle Monomere
in Betracht.

Geeignete Monomere der Gruppe 1 sind insbesondere Hydroxyalkylester, α,β-ungesättigter Carbonsäuren, insbesondere von Acrylsäure oder Methacrylsäure mit 2 bis 12, vorzugsweise 2 bis 6, Kohlenstoffatomen im Hydroxyalkylrest. Beispielhaft genannt seien 2-Hydroxyethylacrylat, 2-Hydroxypropylacrylat, 1-Hydroxymethylethylacrylat, 2-, 3- und 4-Hydroxybutylacrylat, die isomeren Hydroxypentylacrylate, die isomeren Hydroxyhexylacrylate und die diesen Acrylate entsprechenden Methacrylate. Die Hydroxylgruppen aufweisenden Hydroxyalkylester können sowohl primäre als auch sekundäre Hydroxylgruppen aufweisen. Grundsätzlich möglich ist auch eine Variante, derzufolge die beispielhaft genannten Hydroxylgruppen aufweisenden Monomeren ganz oder teilweise durch Modifizierungsprodukte ersetzt werden, die dadurch erhalten werden, daß die beispielhaft genannten Hydroxyalkyl(meth)acrylate einer Modifizierungsreaktion unterzogen werden. Geeignete derartige Modifizierungsreaktionen sind beispielsweise die Anlagerung von cyclischen Estern wie beispielsweise ε-Caprolacton unter ringöffnender Esterbildung oder die Anlagerung von Epoxiden wie beispielsweise Ethylenoxid, Propylenoxid oder Butylenoxid oder 2-Ethylhexyl-glycidylether im Sinne einer ringöffnenden Etherbildung. Anstelle der Anlagerung von Epoxiden an Hydroxyalkylester der genannten Art können selbstverständlich bei deren Herstellung durch Alkoxylierung von Acrylsäure bzw. Methacrylsäure auch entsprechend höhere Mengen an Alkylenoxiden (mehr als 1 Mol Alkylenoxid pro Mol Säure) zum Einsatz gelangen, so daß unmittelbar Hydroxyl- und Ethergruppen aufweisende Ester der genannten Säuren entstehen, die dann als Monomere der Gruppe 1 zum Einsatz gelangen können. Die Verwendung von derartigen, Ethergrupppen oder auch zusätzliche Estergruppen aufweisenden Monomeren ist allerdings keineswegs bevorzugt. Auch die Modifizierung der unter Verwendung von unmodifizierten Hydroxyalkyl(meth)acrylaten hergestellten Copolymerisate im Sinne derartiger Anlagerungsreaktionen im Anschluß an die Herstellung der Copolymerisate ist denkbar und würde eine äquivalente Arbeitsweise zu der Verwendung von modifizierten Monomeren darstellen.

Die beispielhaft genannten, Hydroxylgruppen aufweisenden Monomeren werden bei der Herstellung der Copolymerisate b) in Mengen von weniger als 50 Gew.-%, vorzugsweise von weniger als 30 Gew.-%, bezogen auf alle Monomeren, eingesetzt. Besonders bevorzugt liegt der Gewichtsanteil der Monomeren der Gruppe 1 bei 5 bis 20 Gew.-%, bezogen auf das Gesamtgewicht der eingesetzten Monomeren. Im Falle der Verwendung bzw. Mitverwendung von modifizierten, Hydroxylgruppen aufweisenden Monomeren gehen diese als solche in die Berechnung ein.

Monomere der Gruppe 2 sind insbesondere einfach olefinisch ungesättigte Verbindungen des Molekulargewichtsbereich 53 bis 400, vorzugsweise 80 bis 220. Hierzu gehören beispielsweise Acrylsäure- oder Methacrylsäure-alkylester oder -cycloalkylester mit 1 bis 18, vorzugsweise 1 bis 6, Kohlenstoffatomen im Alkyl- bzw. Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder Octadecylester der genannten Säuren, die 3,5,5-Trimethylcyclohexyl-, Isobornyl- oder Cyclohexylester der genannten Säuren, Acrylnitril, Vinylether, Methacrylnitril, Vinylacetat, Vinylchlorid, Styrol, Vinyltoluol oder auch anhydridfunktionelle ungesättigte Monomere wie Itaconsäureanhydrid oder Maleinsäureanhydrid oder beliebige Gemische derartiger Monomerer.

Zu den gegebenenfalls mitzuverwendenden Monomeren der Gruppe 3, die im allgemeinen in Mengen von bis zu 5,0, vorzugsweise von 0,1 bis zu 3,0 Gew.-%, bezogen auf das Gesamtgewicht aller Monomeren mitverwendet werden, gehören beispielsweise carboxylgruppenhaltige ungesättigte Monomere wie beispielsweise Acrylsäure, Methacrylsäure. Itaconsäure, Crotonsäure und Halbester der Malein- und Fumarsäure sowie deren Mischungen, epoxidfunktionelle ungesättigte Monomere wie Glycidylmethacrylat, Glycidylacrylat oder Umsetzungsprodukte von (i) Säuren wie Acrylsäure, Methacrylsäure, Maleinsäure, Fumarsäure, Itaconsäure oder Crotonsäure mit (ii) Polyepoxiden wie beispielsweise Bisphenol-A-diglycidylether.

Das als Polymerisationsmedium dienende Lösungsmittel kann beispielsweise ausgewählt sein aus der Gruppe bestehend aus Toluol, Xylol, Chlorbenzol, Butylacetat, Ethylacetat, Ethylglykolacetat, Pentylacetat, Hexylacetat, Methoxypropylacetat, Tetrahydrofuran, Dioxan, Aceton, Methylethylketon, höher substituierten Aromaten, wie z.B. Solvent Naphtha®, Schwerbenzol, verschiedene Solvesso®-Typen, verschiedene Shellsol®-Typen und Diasol® sowie höhersiedenden aliphatischen und cycloaliphatischen Kohlenwasserstoffe, wie z.B. verschiedenen Testbenzinen, Mineralterpentinöl, Isopar®-Typen, Nappar®-Typen, Tetralin und Dekalin sowie Gemischen derartiger Lösungsmittel.

Als Lösungsmittel können in untergeordnetem Maße Reaktivverdünner und niedrigviskose Polyole mitverwendet werden, die mit den Vernetzermolekülen reagieren können.

Die herstellung des Acrylatharzes kann auch in mehr als zwei Stufen erfolgen, wobei sich Copolymerisate mit polymodaler Molekulargewichtsverteilung ergeben. Es werden dann mehrere Monomermischungen bei unterschiedlichen Temperaturen und/oder unterschiedlichen Initiatorkonzentrationen in einem Reaktionsgefäß polymerisiert. Hilfsmittel, die zusätzlich das Molekulargewicht regeln, können wie im zweistufigen Verfahren mitverwendet werden.

Die Copolymerisate können im Anschluß an die Polymerisation nach bekannten Verfahren, z.B. durch Umsetzung mit Glycid oder Glycidestern, Carbonsäureanhydriden wie Phthalsäureanhydrid, durch Veresterung oder Umesterung mit Carbonsäuren bzw. Carbonsäureestern wie Benzoesäure, Ethylhexansäure, Fettsäuren oder Ölsäure modifiziert werden. Durch diese Modifizierung können gewisse Eigenschaften wie Pigmentverträglichkeit, Haftung und Alkalibeständigkeit verbessert werden.

Vorzugsweise werden beim erfindungsgemäßen Verfahren jedoch die unmodifizierten Polyhdroxypolyacrylatharze eingesetzt, da deren Kombinationen mit den genannten Lackpolyisocyanaten bereits eine ausgezeichnete Pigmentbenetzbarkeit aufweisen, was sich u.a. darin äußert, daß die erfindungsgemäß hergestellten, ausgehärteten Lackfilme eine gleichmäßige, hochglänzende Oberfläche aufweisen.

Wie bereits oben ausgeführt, kann die in den erfindungsgemäßen Bindemittelgemischen vorliegende Komponente b) auch aus Abmischungen von getrennt hergestellten Polyhydroxy-polyacrylaten bestehen, dies ist jedoch weniger bevorzugt.

Die erfindungsgemäßen Beschichtungsmittelgemische können neben den wesentlichen Komponenten a) und b) gegebenenfalls auch noch c) reaktive Verdünner in einer Menge von bis zu 5 Gew.-%, bezogen auf das Gewicht der Komponente b),enthalten. Reaktive Verdünner sind insbesondere mehrwertige Alkohole des Molekulargewichtsbereichs 62 bis 200 wie beispielsweise Ethylenglykol, Propylenglykol, 1,4-Butandiol, 2-Ethyl-1,3-hexandiol, 1,6-Hexandiol oder beliebige Gemische derartiger mehrwertiger Alkohole. Diese reaktive Verdünner können der Komponente b) nach ihrer Herstellung oder bereits während ihrer Herstellung als Teil des Lösungsmittels einverleibt werden.

Außerdem können die Bindemittelgemische auch weitere Hilfs- und Zusatzmittel, insbesondere Lösungsmittel der bei der Herstellung der Komponente b) eingesetzten Art enthalten.

Die Mengenverhältnisse der reaktiven Komponenten (Isocyanatkomponente a) einerseits und Komponenten b) und gegebenenfalls c) andererseits) werden im übrigen so bemessen, daß das NCO/OH-Äquivalentverhältnis bei 0,2:1 bis 5:1, vorzugsweise 0,7:1 bis 1,3:1, liegt.

Bei der Herstellung von gebrauchsfertigen Beschichtungsmitteln unter Verwendung der erfindungsgemäßen Bindemittelgemische können diese mit weiteren aus der Polyurethanlacktechnologie üblichen Hilfs- und Zusatzmitteln vermischt werden. Hierzu gehören beispielsweise Verlaufmittel auf Celluloseesterbasis, Oligoalkylacrylate, Pigmente und Füllstoffe, viskositätskontrollierende Zusätze wie Betonite und Kieselsäureester, Mattierungsmittel wie beispielsweise Kieselsäure, Aluminiumsilikate und hochmolekulare Wachse oder Katalysatoren für die Isocyanat-Additionsreaktion wie beispielsweise Zinn(II)octoat oder Dimethylbenzylamin.

Die unter Verwendung der erfindungsgemäßen Bindemittelgemische hergestellten Beschichtungsmittel können nach allen beliebigen Methoden der Lacktechnologie wie z.B. Spritzen, Streichen, Tauchen, Gießen oder Walzen auf beliebige Substrate wie z.B. Metalle, Holz, Mauerwerk, Beton, Glas, Keramik, Kunststoffe, Textilien oder Papier aufgetragen werden. Ein besonders bevorzugtes Substrat ist Holz.

Die erfindungsgemäß um Einsatz gelangenden Beschichtungsmittel zeichnen sich durch ein langes "pot life", sehr schnelle Trocknungszeiten bei Temperaturen von 10 bis 60°C, guten Verlauf sowie Farbtreue bzw. Klarheit und hervorragende mechanische Eigenschaften der mit ihnen erhaltenen Beschichtungen aus.

Die folgenden Beispiele sollen die Erfindung näher erläutern. Ein Vergleich der erfindungsgemäßen Beispiele mit den nicht erfindungsgemäßen Beispielen belegt die Vorteile der neuen Bindemittel. Alle Angabenin "Teilen" und "%" beziehen sich auf das Gewicht.

### Beispiel 1

### Herstellung des Acrylatharzes I

In einem 10 l Edelstahldruckreaktor mit Rühr-, Kühl- und Heizvorrichtung wird Teil I vorgelegt und auf 95°C aufgeheizt. Dann werden parallel Teil II und 1/4 von Teil IV über einen Zeitraum von 1,0 h zudosiert. Im Anschluß wird die Temperatur innerhalb von 30 Minuten auf 125°C erhöht. Nun erfolgt die gleichzeitige Zugabe von Teil III (innerhalb von 1,5 Stunden) und der Rest von Teil IV (innerhalb von 2 Stunden). Die Nachrührzeit beträgt 1,5 Stunden bei 120°C.
- I: 2227 Teile Xylol
1639 Teile Butylacetat
- II: 1640 Teile Methylmethacrylat
122 Teile Hydroxyethylmethacrylat
307 Teile n-Butylmethacrylat
25 Teile Acrylsäure
- III: 1516 Teile Methylmethacrylat
432 Teile Hydroxyethylmethacrylat
277 Teile Butylmethacrylat
21 Teile Acrylsäure
- IV: 293 Teile tert.-Butylperoxy-2-ethyl-hexanoat,
70 % in Butylacetat
501 Teile Butylacetat

Das erhaltene Acrylatharz hat einen Festkörpergehalt von 50 %, eine Viskosität von 2 600 mPa•s/23°C, eine Säurezahl von 4,5 und eine OH-Zahl von 28, entsprechend einem OH-Gehalt von 0,85 %. Die GPC-Untersuchung ergibt ein Maximum von 12 000 und eine Schulter bei 25 000, bezogen auf Polystyrolstandard. Das mittlere Molekulargewicht (Mn) des erhaltenen Polyacrylats liegt bei 3 400.

### Beispiel 2

### Herstellung des Acrylatharzes II

Bei veränderter Zusammensetzung erfolgt die Herstellung wie in Beispiel 1.
- I: 2227 Teile Xylol
1639 Teile Butylacetat
- II: 1645 Teile Methylmethacrylat
89 Teile Hydroxyethylmethacrylat
337 Teile n-Butylmethacrylat
25 Teile Acrylsäure
- III: 1564 Teile Methylmethacrylat
364 Teile Hydroxyethylmethacrylat
295 Teile Butylmethacrylat
21 Teile Acrylsäure
- IV: 293 Teile tert.-Butylperoxy-2-ethyl-hexanoat,
70 % in Butylacetat
501 Teile Butylacetat

Das so erhaltene Polyacrylat hat einen Festkörpergehalt von 50 %, eine Viskosität von 2 100 mPa•s/23°C, eine Säurezahl von 4,4 und eine OH-Zahl von 21, entsprechend einem OH-Gehalt von 0,64 %. Die GPC-Untersuchung ergibt ein Maximum bei 12 000 und ein weiteres Nebenmaximum bei 27 000, bezogen auf Polystyrolstandard. Das mittlere Molekulargewicht (Mn) des erhaltenen Polyacrylats beträgt 3 600.

### Beispiel 3

### Herstellung des Vergleichsacrylatharzes III nach einstufiger Verfahrensweise (nicht erfindungsgemäß)

In einem 10 l Edelstahlreaktor wie in Beispiel 1 wird Teil I vorgelegt und auf 125°C aufgeheizt. Teil II wird innerhalb von 3,0 Stunden, parallel dazu Teil III innerhalb von 3,5 Stunden zudosiert. Danach wird 2 Stunden bei 120°C nachgerührt.
- I: 2227 Teile Xylol
1639 Teile Butylacetat
- II: 3030 Teile Methylmethacrylat
715 Teile Hydroxyethylmethacrylat
550 Teile Butylmethacrylat
45 Teile Acrylsäure
- III: 293 Teile tert.-Butylperoxy-2-ethylhexanoat,
70 % in Butylacetat
501 Teile Butylacetat

Das Polyacrylat hat einen Festkörpergehalt von 50 %, eine Viskosität von 2700 mPa•s/23°C, eine Säurezahl von 4,7 und eine OH-Zahl von 34 (OH-Gehalt = 1,0 %). Die GPC-Untersuchung zeigt hier nur ein Maximum bei 12 000,bezogen auf Polystyrolstandard. Das Polyacrylat hat eine mittlere Molmasse (Mn) von 3 300.

### Beispiele 4 und 5 (erfindungsgemäß) und 6 (Vergleich)

### Herstellung von Klarlackfilmen

Zur Herstellung von Klarlackfilmen werden die unter den Beispielen 1, 2 und 3 (Vergleichsbeispiel) hergestellten Acrylatharze mit einer äquivalenten Menge einer Polyisocyanatlösung (NCO/OH-Äquivalentverhältnis = 1:1) versetzt und mit dem zur Herstellung der Copolymerisate jeweils eingesetzten Lösungsmittelgemisch auf eine Viskosität von 20 Sek. im DIN-Becher 4 eingestellt. Als Polyisocyanatlösung dient eine 75 %ige Lösung in Methoxypropylacetat/Xylol (1:1) eines Biuretgruppen aufweisenden Polyisocyanats auf Basis 1,6-Diisocyanatohexan mit einem NCO-Gehalt von 16,5 %.

Von diesen Lösungen werden 210 µm Naßfilme aufgereinigte Bleche aufgezogen.

In der Tabelle 1 sind die lacktechnischen Eigenschaften der erfindungsgemäßen Beispiele 4 und 5 denen des Vergleichsbeispiels 6 gegenübergestellt.

**Tabelle 1**

| | Beispiel 4 | Beispiel 5 | Beispiel 6 |
|---|---|---|---|
| Handtrocknung | 4 h | 3 h | 7 h |
| Auslaufzeit im DIN-Becher 4 nach 24 h in s | von 20 auf 36 | von 20 auf 33 | von 20 auf 52 |
| Pendelhärte in s nach 14 Tagen | 154 | 153 | 147 |
| Anlösbarkeit Tol/Buac/MPA/Aceton nach 7 Tagen | 2 2 2 2 | 2 2 2 2 | 2 2 2 2 |

Aus diesem Befund ergeben sich die Vorteile der erfindungsgemäßen Systeme: Bei ansonsten gleichen Ausgangsbedingungen (gleiche Lösungsmittel, gleiche Monomere, gleicher Initiator, gleiche Initiatorgesamtkonzentration) bewirkt die bimodale Molekulargewichtsverteilung der erfindungsgemäßen Polyacrylatkomponente trotz deutlicher Reduzierung des Hydroxylgruppengehalts und der damit im Zusammenhang stehenden Reduzierung der Vernetzungsdichte eine gleiche Lösungsmittelbeständigkeit, ein Verdopplung der Antrocknungsgeschwindigkeit, eine Verbesserung der Verarbeitungszeit und eine Erhöhung der Härte der Beschichtung.

## Patentansprüche

1. Bindemittelgemisch für bei Raumtemperatur trocknende Zweikomponenten-Polyurethan-Beschichtungsmittel, bestehend im wesentlichen aus
a) einer Polyisocyanatkomponente,
b) einer hydroxyfunktionellen Polyacrylatkomponente und gegebenenfalls
c) reaktiven Verdünnern
in einem, einem NCO/OH-Äquivalentverhältnis von 0,2:1 bis 5:1 entsprechenden Mengenverhältnis, dadurch gekennzeichnet, daß es sich bei der Polyacrylatkomponente b) um ein Gemisch von mindestens zwei, durch radikalische Copolymerisation olefinisch ungesättigter Monomerer in einem Lösungsmittel hergestellte, Hydroxylgruppen aufweisende Poly(meth)acrylatharze des Molekulargewichtsbereichs Mn 1 000 bis 100 000 mit mindestens bimodaler Molekulargewichtsverteilung handelt, bei deren Herstellung Monomerengemische mit einem Anteil an Hydroxylgruppen aufweisenden Monomeren von weniger als 50 Gew.-% eingesetzt worden sind, wobei das Maximum des gelpermeationschromatographisch bestimmten Molekulargewichts Mn der Harzkomponente mit dem höchsten Molekulargewicht mindestens das 1,3fache des Maximums des gelpermeationschromatographisch bestimmten Molekulargewichts Mn der Harzkomponente mit dem niedrigsten Molekulargewicht beträgt, und wobei die Komponente mit dem höchsten Molekulargewicht einen Hydroxylgruppengehalt von 0,1 bis 4 Gew.-% und die Komponente mit dem niedrigsten Molekulargewicht einen Hydroxylgruppengehalt von 0,5 bis 8 Gew.-% aufweist, mit der Maßgabe, daß der Hydroxylgruppengehalt der Komponente mit dem niedrigsten Molekulargewicht mindestens das 2fache des Hydroxylgruppengehalts der Komponente mit dem höchsten Molekulargewicht beträgt.

2. Bindemittelgemisch gemäß Anspruch 1, dadurch gekennzeichnet, daß es sich bei der Komponente b) im wesentlichen um ein binäres Gemisch von Poly(meth)acrylatharzen bimodaler Molekulargewichtsverteilung handelt, in welchem das Copolymerisat mit dem niedrigeren Molekulargewicht in einer Menge von 30 bis 70 Gew.-% vorliegt.

3. Bindemittelgemisch gemäß Anspruch 1 und 2, dadurch gekennzeichnet, daß eine solche Komponente b) eingesetzt wird, die durch eine mindestens zweistufige Polymerisationsreaktion von mindestens zwei unterschiedlichen Monomermischungen in einem als Lösungsmittel dienenden organischen Medium nacheinander im gleichen Reaktionsgefäß hergestellt worden ist.

4. Bindemittelgemisch gemäß Anspruch 1 bis 3, dadurch gekennzeichnet, daß die Polyisocyanat-Komponente a) aus mindestens einem Uretdion-, Biuret-, Urethan- und/oder Isocyanuratgruppen aufweisenden Polyisocyanat mit (cyclo)aliphatisch gebundenen Isocyanatgruppen auf Basis von (cyclo)-aliphatischen Diisocyanaten des Molekulargewichtsbereichs 168 bis 300 besteht

5. Verwendung von Bindemittelgemischen gemäß Anspruch 1 bis 4 als Bindemittel für Zweikomponenten-Polyurethan-Beschichtungsmitteln.

## Claims

1. Binder mixture for two-component polyurethane coating compositions which dry at room temperature, substantially consisting of
a) a polyisocyanate component,
b) a hydroxy-functional polyacrylate component and optionally
c) reactive diluents
in a quantity ratio corresponding to an NCO/OH equivalent ratio of 0.2:1 to 5:1, characterised in that the polyacrylate component b) is a mixture of at least two poly(meth)acrylate resins which contain hydroxyl groups, are of the molecular weight range Mn 1000 to 100000 with an at least bimodal molecular weight distribution and were produced by free radical copolymerisation of olefinically unsaturated monomers in a solvent, during the production of which resins monomer mixtures were used with a proportion of monomers containing hydroxyl groups of less than 50 wt.%, wherein the maximum molecular weight Mn determined by gel permeation chromatography of the resin component with the highest molecular weight is at least 1.3 times the maximum molecular weight Mn determined by gel permeation chromatography of the resin component with the lowest molecular weight and wherein the component with the highest molecular weight has a hydroxyl group content of 0.1 to 4 wt.% and the component with the lowest molecular weight has a hydroxyl group content of 0.5 to 8 wt.%, providing that the hydroxyl group content of the component with the lowest molecular weight is at least twice the hydroxyl group content of the component with the highest molecular weight.

2. Binder mixture according to claim 1, characterised in that component b) is substantially a binary mixture of poly(meth)acrylate resins of a bimodal molecular weight distribution, in which mixture the copolymer with the lower molecular weight is present in a quantity of 30 to 70 wt.%.

3. Binder mixture according to claims 1 and 2, characterised in that such a component b) is used as was produced by an at least two-stage polymerisation reaction of at least two different monomer mixtures in an organic medium acting as solvent and proceeding in succession in the same reaction vessel.

4. Binder mixture according to claims 1 to 3, characterised in that polyisocyanate component a) consists of at least one polyisocyanate containing uretidione, biuret, urethane and/or isocyanurate groups and having (cyclo)aliphatically attached isocyanate groups based on (cyclo)aliphatic diisocyanates of the molecular weight range from 168 to 300.

5. Use of the binder mixtures according to claims 1 to 4 as binders for two-component polyurethane coating compositions.

## Revendications

1. Mélange de liants pour des agents d'enduction de polyuréthanne à deux composants séchant à la température ambiante, constitué essentiellement par
a) un composant de polyisocyanate,
b) un composant de polyacrylate hydroxyfonctionnel, et éventuellement par
c) des diluants réactifs
en une proportion correspondant à un rapport d'équivalents NCO/OH de 0,2:1 à 5:1, caractérisé en ce que, en ce qui concerne le composant de polyacrylate b), il s'agit d'un mélange de résines de poly(méth)acrylate présentant au moins deux groupes hydroxyle, préparées dans un solvant par copolymérisation radicalaire de monomères à insaturation oléfinique, du domaine de poids moléculaire Mn de 1.000 à 100.000, dont la distribution du poids moléculaire est au moins bimodale, dans la préparation desquelles on met en oeuvre des mélanges de monomères dont la fraction de monomères présentant des groupes hydroxyle est inférieure à 50% en poids, le maximum du poids moléculaire Mn du composant de résine possédant le poids moléculaire le plus élevé, déterminé à l'aide d'une chromatographie par perméation du gel s'élevant au moins à 1,3 fois le maximum du poids moléculaire Mn du composant de résine possédant le poids moléculaire le plus faible, déterminé à l'aide d'une chromatographie par perméation du gel, et dans lequel le composant possédant le poids moléculaire le plus élevé présente une teneur en groupes hydroxyle de 0,1 à 4% en poids et le composant possédant le poids moléculaire le plus faible présente une teneur en groupes hydroxyle de 0,5 à 8% en poids, avec cette mesure que la teneur en groupes hydroxyle du composant possédant le poids moléculaire le plus faible s'élève au moins au double de la teneur en groupes hydroxyle du composant possédant le poids moléculaire le plus élevé.

2. Mélange de liants selon la revendication 1, caractérisé en ce que, en ce qui concerne le composant b), il s'agit essentiellement d'un mélange binaire de résines de poly(méth)acrylates dont la distribution du poids moléculaire est bimodale, dans lequel le copolymère possédant le poids moléculaire inférieur est présent en une quantité de 30 à 70% en poids.

3. Mélange de liants selon les revendications 1 et 2, caractérisé en ce qu'on met en oeuvre un composant b) qui a été préparé par une réaction de polymérisation en au moins deux étapes, d'au moins deux mélanges de monomères différents dans un milieu organique servant de solvant, successivement, dans le même récipient réactionnel.

4. Mélange de liants selon les revendications 1 à 3, caractérisé en ce que le composant de polyisocyanate a) est constitué par au moins un polyisocyanate présentant des groupes uretdione, biuret, uréthane et/ou isocyanurate, contenant des groupes isocyanate liés à des radicaux (cyclo)aliphatiques, à base de diisocyanates (cyclo)aliphatiques du domaine de poids moléculaire de 168 à 300.

5. Utilisation de mélanges de liants selon les revendications 1 à 4, comme liants pour des agents d'enduction de polyuréthanne à deux composants.
